# EUROPEAN PATENT SPECIFICATION

(11) **EP 2 299 436 B1**
(45) Date of publication and mention of the grant of the patent: **13.03.2013**
(21) Application number: 10192372.0
(22) Date of filing: 24.12.2002
(51) Int. Cl.: G09G 3/36, G06F 3/147

(54) **Apparatus and method for improving response speed of LCD**
Vorrichtung und Methode zur Verbesserung der Antwort-Geschwindigkeit eines LCDs
Dispositif et méthode pour améliorer le temps de réponse d'un afficheur à cristaux liquides

(30) Priority: 10.04.2002 KR 20020019478
(43) Date of publication of application: 23.03.2011
(62) Divisional of application: 02258976.6
(73) Proprietor: Samsung Electronics Co., Ltd., Suwon-si, Gyeonggi-do, 443-742 (KR)
(72) Inventor: Lee, Sang-hak, Seoul (KR); Lee, Sang-un, Gyeonggi-do (KR)
(74) Representative: Robinson, Ian Michael

(56) References cited:
- US-A- 5 465 102
- US-A- 5 844 533
- US-A1- 2001 038 372
- US-A1- 2002 024 481

## Description

The present invention relates to an apparatus and method to operate a liquid crystal display (LCD), and more particularly, to an apparatus that reduces sensitivity to noise in a digital image signal to improve a response speed of an LCD, and a method therefor.

As size and weight of personal computers (PCs) and televisions (TVs) reduce continuously, light and compact displays devices have been developed. As a result, flat-panel type displays such as liquid crystal displays (LCDs), have appeared and are replacing the conventional cathode ray tubes (CRTs).

US-A-5,465,102 and US-A-2001/038,372 describe liquid crystal displays of the related art. The appended claims have been characterised over these documents.

The LCD is a display device that produces a desired image signal by applying an electric field to a liquid material that has anisotropic permittivity and is injected between two substrates. An amount of light transmitted to the two substrates is adjusted by controlling an intensity of the applied electric field.

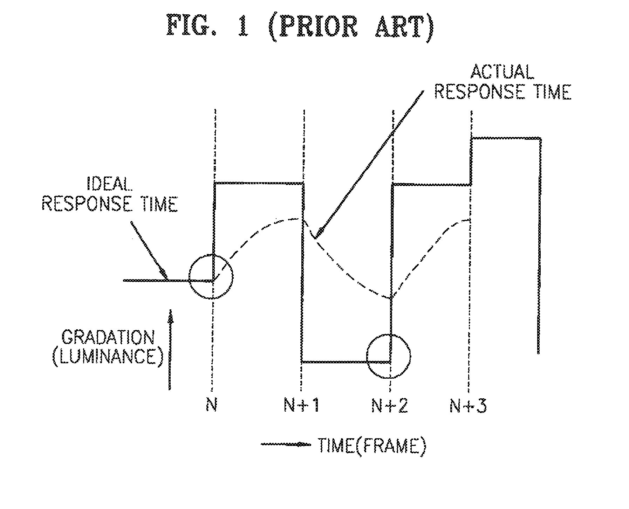

Liquid crystals used in LCDs present a hold-type physical property. In other words, a state of the liquid crystals corresponding to current data is maintained until next data is input. A response speed of the liquid crystals indicates how fast the liquid crystals change according to input data. Most LCD panels have the response speed faster than 1/60 seconds, which corresponds to a speed of one frame per 16.6 ms. Accordingly, as shown in Figure 1, a long period of time corresponding to several frames is necessary between intermediate levels of a general image until the liquid crystal reaches an appropriate voltage in response to the input data. For this reason, ghost, a reduction in a dynamic contract ratio, and blurring edges occur in moving-image display devices such as TVs, digital TVs or DVD players, thereby deteriorating image quality.

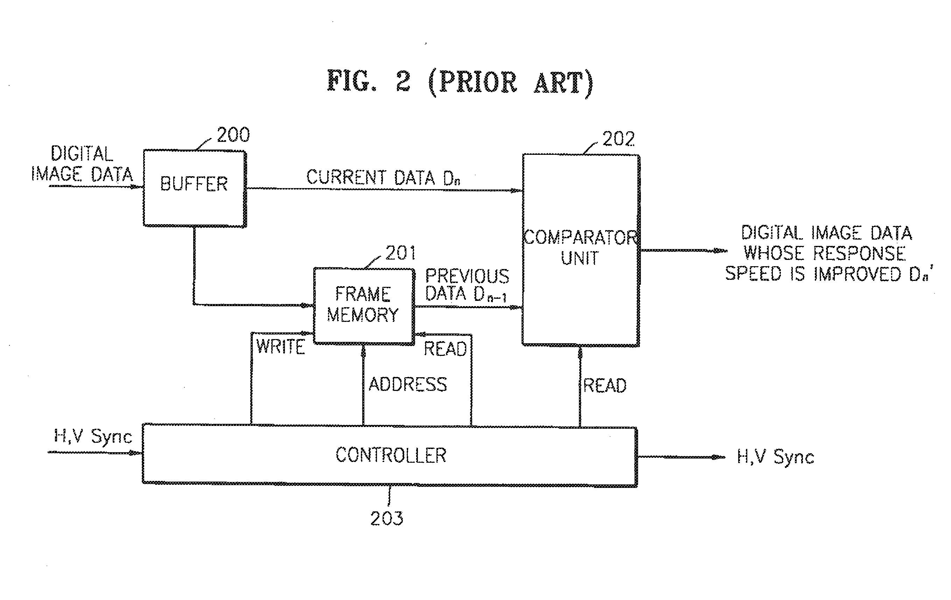

Figure 2 is a block diagram of a conventional apparatus to improve the LCD response speed, which prevents deterioration of the image quality. Input digital image data is temporarily stored in a buffer 200 in conjunction with a frame memory 201. Current image data Dₙ stored in the buffer 200 and previous image data Dₙ₋₁ stored in the frame memory 201 are input to a comparator 202. The comparator 202 compares a gradation of the current image data Dₙ and a gradation of the previous image data Dₙ₋₁ at a same pixel position. If the gradation of the current image data Dₙ and the gradation of the previous image data Dₙ₋₁ are the same, the comparator 202 outputs data Dₙ' that has a response speed of the gradation of the current data Dₙ. If the gradation of the current image data Dₙ is larger than the gradation of the previous image data Dₙ₋₁, the comparator 202 outputs the data Dₙ' that has a gradation larger than that of the current data Dₙ. On the contrary, if the gradation of the current image data Dₙ is smaller than the gradation of the previous image data Dₙ₋₁, the comparator 202 outputs the data Dₙ' that has a gradation smaller than that of the current data Dₙ. A controller 203 controls reading or writing data from or to all blocks.

However, the use of the apparatus to improve the response speed of Figure 2 leads the LCD to be sensitive to every kind of noise. In this case, noise on a screen, which is not serious in the LCD having slow response speed, grows worse after improving the response speed, thereby causing serious deterioration of the image quality.

Various aims and advantages of the invention will be set forth in part in the description that follows and, in part, will be obvious from the description, or may be learned by practice of the invention.

An aim of at least the preferred embodiment of the present invention is to provide an apparatus and method to improve a response speed of an LCD, whilst reducing unwanted sensitivity to noise.

According to the present invention there is provided an apparatus and method as set forth in the appended claims. Preferred features of the invention will be apparent from the dependent claims, and the description which follows.

In one aspect of the present invention there is provided an apparatus to improve a response speed of an LCD, the apparatus including: a noise rejection unit to reject noise in current digital image data and previous digital image data at a same pixel position as in the current digital image data; and a comparator to compare the current digital image data and the previous digital image data of which noises are rejected within a reference value, to change the current digital image data based on a comparison result, and to output a result indicative thereof.

Preferably, the noise rejection unit includes: a first low-pass filter (LPF) to reject a noise in the current digital image data; and a second LPF to reject the noise in the previous digital image data at the same pixel position as in the current digital image data.

The comparator includes a look up table (LUT) to hold gradation data that changes a response speed of the current digital image data.

The comparator accesses the LUT to output the current digital image data when a difference between gradations of the current digital image data and the previous digital image data, of which the noise is rejected, is smaller than the reference value.

The comparator compares the gradation of the current digital image data and the gradation of the previous digital image data, changes the current digital image data and outputs the result, when the difference between the gradations of the current digital image data and the previous digital image data of which the noise is rejected, is larger than the reference value.

The comparator accesses the LUT to increase the gradation of the current digital image data and outputs the result when the difference between the gradations of the current digital image data and the previous digital image data, of which the noise is rejected, is larger than the reference value and the gradation of the current digital image data is larger than the gradation of the previous digital image data. Also, the comparator accesses the LUT to decrease the gradation of the current digital image data and outputs the result when the difference between the gradation of the current digital image data and the previous digital image data, of which the noise is rejected, is larger than the reference value and the gradation of the current digital image data is smaller than the gradation of the previous digital image data.

In a second aspect of the present invention there is provided an apparatus to improve a response speed of an LCD, including: a buffer receiving digital image data and outputting first current image data; a first noise rejection unit rejecting noise in the first current image data and outputting second current image data where noise is rejected; a frame memory storing the first current image data and outputting first previous image data, which precedes the first current image data; a second noise rejection unit outputting second previous image data indicative of noise rejected from the first previous image data; a comparator comparing gradations of the first current image data, the second current image data, the first previous image data, and the second previous image data to output the digital image data having the improved response speed.

Also according to the present invention there is provided a method of improving response speed of an LCD, the method including: rejecting noise in previous digital image data at a same pixel position as current digital image data; comparing a difference between gradations of the current digital image data and the previous digital image data with a reference value and outputting a result indicative thereof; and accessing an LUT storing gradation data that changes a response speed, to change the current digital image data based on the result.

When accessing the LUT, the LUT is accessed to output the current digital image data when the difference between the gradations of the current digital image data and the previous digital image data, of which the noise is rejected, in is smaller than the reference value.

When accessing the LUT, the gradation of the current digital image data is compared with the gradation of the previous digital image data, the gradation of the current digital image data is changed based on the comparison result, and the result is output when the difference between the gradations of the current digital image data and the previous digital image data, of which the noise is rejected, is larger than the reference value.

The LUT is accessed to increase the gradation of the current digital image data and output the result, when the difference between the gradations of the current digital image data and the previous digital image data, of which the noise is rejected, is larger than the reference value and the gradation of the current digital image data is larger than the gradation of the previous digital image data. Also, the LUT is accessed to decrease the gradation of the current digital image data and output the result, when the difference between the gradations of the current digital image data and the previous digital image data, of which the noise is rejected, is larger than the reference value and the gradation of the current digital image data is smaller than the gradation of the previous digital image data.

In accordance with another aspect of the present invention there is provided a method to improve a response speed of an LCD, including: outputting first current image data based on digital image data; rejecting noise in the first current image data and outputting second current image data indicative thereof; outputting first previous image data preceding the first current image data; rejecting noise in the first previous image data and outputting second previous image data indicative thereof; comparing a gradation of the second current image data and a gradation of the second previous image data; and outputting the digital image data having a same response speed as the first current image data when a difference between the gradations of the second current image data and the second previous image data is smaller than a reference value.

In accordance with still another aspect of the present invention, there is provided a method to improve a response speed of an LCD, including: outputting first current image data based on digital image data; rejecting noise in the first current image data and outputting second current image data indicative thereof; outputting first previous image data preceding the first current image data; rejecting noise in the first previous image data and outputting second previous image data indicative thereof; comparing a gradation of the second current image data and a gradation of the second previous image data; and determining whether the gradation of the first current image data is larger than the gradation of the first previous image data when a difference between the gradations of the second current image data and the second previous image data is larger than a reference value.

These together with other aspects and advantages which will be subsequently apparent, reside in the details of construction and operation as more fully hereinafter described and claimed, reference being had to the accompanying drawings forming a part thereof, wherein like numerals refer to like parts throughout.

For a better understanding of the invention, and to show how embodiments of the same may be carried into effect, reference will now be made, by way of example, to the accompanying diagrammatic drawings in which:
Figure 1 is a graph illustrating a characteristic curve of a conventional liquid crystal display (LCD);
Figure 2 is a block diagram of a structure of a conventional apparatus to improve response speed;
Figure 3 is a block diagram of the structure of an apparatus to improve the response speed, according to an embodiment of the present invention;
Figure 4 is a graph illustrating a characteristic curve of the LCD having the improved response speed, according to an embodiment of the present invention; and
Figure 5 is a flow chart illustrating a method to improve the response speed of the LCD, according to an embodiment of the present invention.

Hereinafter, embodiments of the present invention will be described in detail with reference to the attached drawings. The present invention may, however, be embodied in many different forms and should not be construed as being limited to the embodiments set forth herein; rather, these embodiments are provided so that the present disclosure will be thorough and complete, and will fully convey the concept of the invention to those skilled in the art.

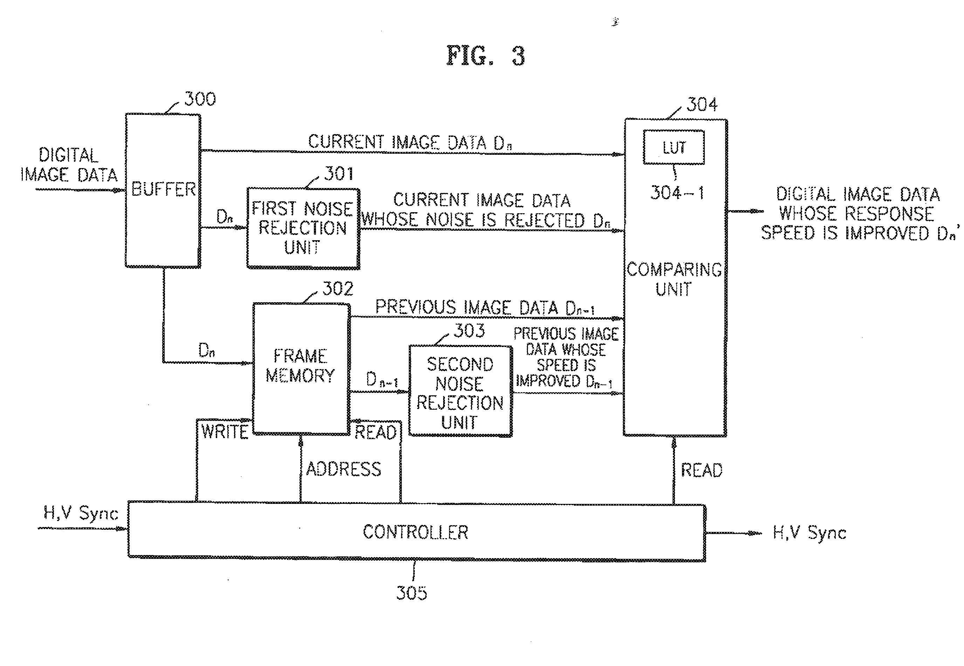

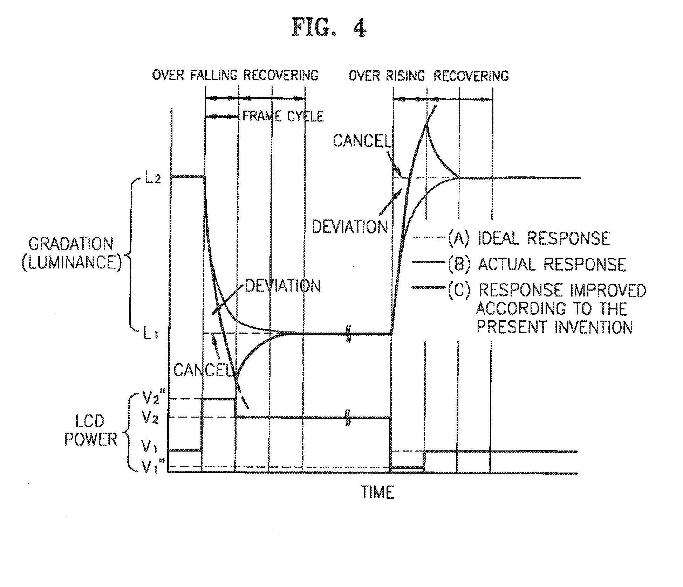

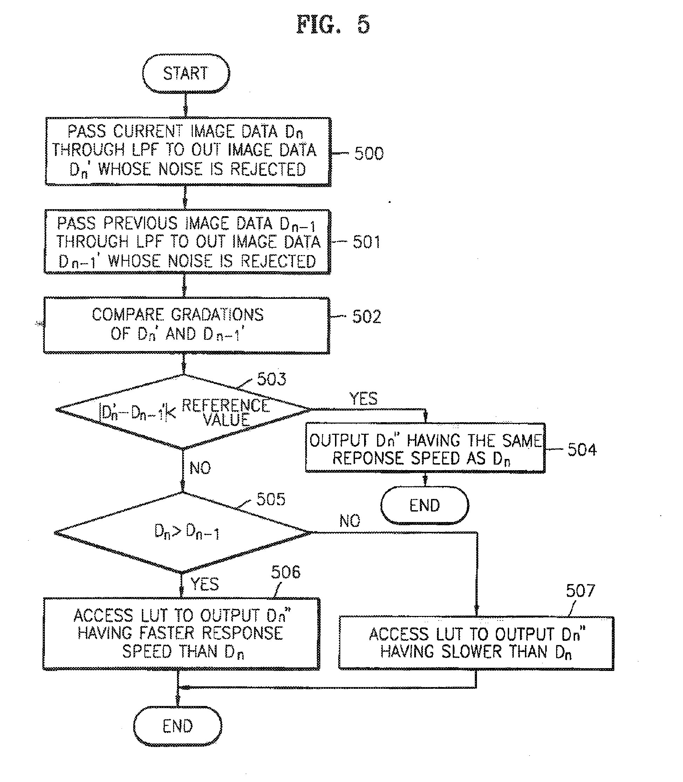

Figure 3 is a block diagram of a structure of an apparatus to improve a response speed of an LCD, according to an embodiment of the present invention. The apparatus includes a buffer 300, a first noise rejection unit 301, a frame memory 302, a second noise rejection unit 303, a comparator 304, a look up table (LUT) 304-1, and a controller 305. Figure 4 is a graph illustrating a characteristic curve of the LCD having the improved response speed. Figure 5 is a flow chart illustrating a method to improve the response speed of the LCD according to an embodiment of the present invention. The method includes, at operation 500, outputting data Dₙ' where noise is rejected by passing current image data Dₙ through a low-pass filter (LPF).

At operation 501, the method outputs data Dₙ₋₁' where the noise is rejected by passing previous image data Dₙ₋₁ through the LPF at a same pixel position of the current image data Dₙ. At operation 502, the method compares the data Dₙ' and the data Dₙ₋₁' where noises are rejected. At operation 503, the method checks whether a difference between gradations of the data Dₙ' and the data Dₙ₋₁' is smaller than a reference value, which is gradation data stored in the LUT 304-1. At operation 504, the method outputs data Dₙ" that has the same response speed as the current data Dₙ and, at2 operation 505, the method checks whether the gradation of the current data Dₙ is larger than the gradation of the data Dₙ₋₁. At operation 506, the method outputs data Dₙ" that has the response speed faster than that of the current image data Dₙ by accessing an LUT. At operation 507, the method outputs data Dₙ" that has the response speed slower than that of the current image data Dₙ by accessing the LUT.

Hereinafter, the apparatus to improve the response speed, according to an embodiment of the present invention, will be described in detail with reference to Figures 3 and 4. Here, the buffer 300 temporarily stores an input digital image data.

The first noise rejection unit 301 includes a low-pass filter (LPF), and rejects the noise contained in the image data Dₙ output from the buffer 300. The first noise rejection unit 301 receives the image data Dₙ and outputs the image data Dₙ'.

The frame memory 302 stores the current image data Dₙ output from the buffer 300 and outputs the previous image data Dₙ₋₁, which precedes the current image data Dₙ, in response to a control signal from the controller 305.

The second noise rejection unit 303 also includes an LPF, and outputs image data Dₙ₋₁' indicative of the noise rejected from the previous image data Dₙ₋₁.

The comparator 304 receives and compares the current image data Dₙ, the current image data Dₙ' that has the noise rejected, the previous image data Dₙ₋₁ having a same pixel position as the current image data Dₙ, and the previous image data Dₙ₋₁' that has the noise rejected. Thereafter, the comparator 304 outputs the current image data Dₙ" having an improved response speed. The comparator 304 includes the LUT 304-1 that holds the gradation data that changes the response speed of the current digital image data and outputs the gradation data that changes the gradation of the current image data Dₙ.

The comparator 304 compares a difference between gradations of the current image data Dₙ' and previous image data Dₙ₋₁' where the noises are rejected with the reference value, and outputs the image data Dₙ" having the same response speed as the current image data Dₙ, when the difference is smaller than the reference value. Here, Dₙ" denotes the same current image data Dₙ.

On the contrary, if the difference is larger than the reference value, the comparator 304 compares the gradation of the current image data Dₙ and the gradation of the previous image data Dₙ₋₁, changes the response speed of the current image data Dₙ, i.e., changes the gradation, and outputs the current image data Dₙ. When the gradation of the current image data Dₙ is larger than that of the previous image data Dₙ₋₁, the comparator 304 accesses the LUT 304-1 and outputs the image data Dₙ" having the response speed faster than the current digital image data Dₙ. Here, Dₙ" denotes the current image data Dₙ having the increased gradation. When the gradation of the current image data Dₙ is smaller than that of the previous image data Dₙ₋₁, the comparator 304 accesses the LUT 304-1 and outputs the image data Dₙ" with the response speed slower than that of the current digital image data Dₙ. Here, Dₙ" denotes the current image data Dₙ with the reduced gradation.

Referring to Figure 4, (a) illustrates an LCD ideal response, (b) illustrates an LCD actual response, and (c) illustrates the LCD response after applying the inventive embodiment. In detail, the response in (c) is obtained by comparing the gradation of the image signal where the noise is rejected with the reference value and the gradation of the image signal is improved based on the compared result. The response in (c) is approximately closer to the LCD ideal response in (a) than the LCD actual response in (b), thereby correcting image distortion.

Figure 5 is a flow chart illustrating the method of improving the response speed. At operation 500, the current image data Dₙ is passed through the LPF 301 to reject noise therein and is output as the Dₙ'.

At operation 501, the previous image data Dₙ₋₁ is passed through the LPF 301, the same pixel position as the current image data Dₙ, so as to cancel the noise in the previous image data Dₙ₋₁ and is output as data Dₙ₋₁'. At operation 502, the comparator 304 compares the gradation of the current image data Dₙ' and the gradation of the previous image data Dₙ₋₁'. At operation 503, the comparator 304 checks if the difference between the gradations of the current image data Dₙ' and previous image data Dₙ₋₁' is smaller than the reference value.

If it is determined at operation 503 that the difference is smaller than the reference value, at operation 504, the image data Dₙ" that has the same response speed as the current image data Dₙ is output. Here, Dₙ denotes the same current image data Dₙ.

If it is determined at operation 503 that the difference is larger than the reference value, at operation 505, the comparator 304 checks whether the gradation of the current image data Dₙ is larger than that of the previous image data Dₙ₋₁.

When the difference between the gradations of the current image data Dₙ' where the noise is rejected and the previous image data Dₙ₋₁' where the noise is rejected is larger than the reference value and the gradation of the current image data Dₙ is larger than the previous image data Dₙ₋₁, at operation 506, the LUT 304-1 is accessed to output image data Dₙ" that has a larger response speed than the current image data Dₙ. Here, Dₙ" denotes the current image data where gradation is increased.

When the gradation difference is larger than the reference value and the gradation of the current image data Dₙ' is smaller than the gradation of the previous image data Dₙ₋₁', at operation 507, the LUT 304-1 is accessed to output the image data Dₙ" of which the response speed is slower than the current image data Dₙ. Here, Dₙ" denotes the current image data Dₙ having the reduced gradation.

As described above, according to the present invention, image distortion due to noise, which is a problem in existing methods to improve a response speed, can be solved. Further, the response speed of an LCD is improved, thereby reducing an occurrence of ghost and blurring edges to a desired level.

The various features and advantages of the invention are apparent from the detailed specification and, thus, it is intended by the appended claims to cover such features and advantages of the invention that fall within the scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention as defined in the claims.

Each feature disclosed in this specification (including any accompanying claims and drawings) may be replaced by alternative features serving the same, equivalent or similar purpose, unless expressly stated otherwise. Thus, unless expressly stated otherwise, each feature disclosed is one example only of a generic series of equivalent or similar features.

## Claims

1. A method of improving a response speed of liquid cristals of an liquid crystal display LCD, the method comprising the steps of:
rejecting noise in a current digital image data (Dn) of a pixel position and in a previous digital image data (Dn-1) at the same pixel position,
comparing a difference between gradations of a noise rejected current digital image data (Dn') and a noise rejected previous digital image data (Dn-1') with a reference value and determining whether to change the gradation of the current digital image data (Dr) to be output, based on the result of comparison; and accessing a look up table LUT (304-1) storing gradation data that changes a response speed of the liquid crystal in response to the current digital image data (Dn), when it is determined to change the gradation of the current digital image data (Dn).

2. The method according to claim 1, wherein, when the difference between the gradations of the noise rejected current digital image data (Dn') and the noise rejected previous digital image data (Dn-1') is less than the reference value, outputting the current digital data (Dn) without changing the gradation of the current digital image data (Dn).

3. The method according to claim 1, wherein when the difference between the gradations of the noise rejected current digital image data (Dn') and the noise rejected previous digital image data (Dn-1') is greater than the reference value, accessing the LUT (304-1), converting the gradation of the current digital image data (Dn) to change the response speed of liquid crystal in response to current digital image data, and then outputting the converted current digital image data (Dn").

4. The method according to claim 3, wherein when the gradation of the current digital image data (Dn) is greater than the gradation of the previous digital image data (Dn-1), accessing the LUT (304-1) and
outputting the current digital image data (Dn") to which
the response speed of the liquid crystal is faster than the
response speed to current digital image data (Dn).

5. The method according to claim 3, wherein when the gradation of the current digital image data (Dn) is less than the gradation of the previous digital image data (Dn-1), accessing the LUT (304-1) and outputting digital image data (Dn") to which the response speed of the LCD is slower than the response speed of the LCD to that of the current digital image data (Dn).

6. An apparatus to improve a response speed of an LCD, comprising:
a first noise rejection unit (301) configured to reject noise in a current digital image data (Dn);
a second noise rejection unit (303) configured to reject noise in a previous digital image data (Dn-1) at he same pixel position as in the current digital image data (Dn); and
a comparing unit (304), comprising a look up table LUT (304-1) to store gradation data that changes the response speed of the LCD to the current digital image data (Dn), arranged to compare a difference between gradations of a noise rejected current digital image data (Dn') and gradation of a noise rejected previous digital image data (Dn-1') with a reference value and to determine whether to change the gradation of the current digital image data (Dn) according to the result of the comparison, and to output gradation, data that changes the response speed of the LCD to the current digital image data (Dn) from the look table when it is determined to change the gradation of the current digital image data (Dn);
wherein when a difference between the gradations of the noise rejected current digital image data (Dn') and the noise rejected previous digital image data (Dn-1') is less than the reference value, the current digital image data (Dn) is output.

7. The apparatus according to claim 6, wherein when a difference between the gradations of the noise rejected current digital image data (Dn') and the noise rejected previous digital image data (Dn-1') is greater than the reference value, the comparing unit accesses the LUT to current the gradation
of the current digital image data to change the response speed of the LCD and to output the converted digital image data (Dn").

8. The apparatus according to claim 7, wherein when the gradation of the current digital image data (Dn) is greater than the gradation of the previous digital image data (Dn-1), the comparing unit accesses the LUT to out put digital image data (Dn") to which the response speed of the LCD is faster than the response speed of the LCD to the current digital image data (Dn).

9. The apparatus according to claim 7, wherein when the gradation of the current digital image data (Dn) is less than the gradation of the previous digital image data (Dn-1), the comparing unit accesses the LUT to out put digital image data, (Dn") to which the response speed of the LCD is slower than the response speed of the LCD to the current digital image data (Dn).

## Patentansprüche

1. Verfahren zum Verbessern einer Ansprechgeschwindigkeit von Flüssigkristallen einer Flüssigkristallanzeige, LCD, wobei das Verfahren die folgenden Schritte umfasst:
Zurückweisen von Rauschen in aktuellen digitalen Bilddaten (Dn) einer Pixelposition und in früheren digitalen Bilddaten (Dn - 1) an derselben Pixelposition;
Vergleichen einer Differenz zwischen Abstufungen von aktuellen digitalen Bilddaten (Dn') mit zurückgewiesenem Rauschen und von früheren digitalen Bilddaten (Dn - 1') mit zurückgewiesenem Rauschen mit einem Referenzwert und Bestimmen anhand des Vergleichsergebnisses, ob die Abstufung der auszugebenden aktuellen digitalen Bilddaten (Dn) geändert werden soll; und
Zugreifen auf eine Nachschlagtabelle LUT (304-1) zum Speichern von Abstufungsdaten, die eine Ansprechgeschwindigkeit des Flüssigkristalls als Reaktion auf die aktuellen digitalen Bilddaten (Dn) ändern, wenn festgestellt wird, dass die Abstufung der aktuellen digitalen Bilddaten (Dn) geändert werden soll.

2. Verfahren nach Anspruch 1, wobei dann, wenn die Differenz zwischen den Abstufungen der aktuellen digitalen Bilddaten (Dn') mit zurückgewiesenem Rauschen und der früheren digitalen Bilddaten (Dn - 1') mit zurückgewiesenem Rauschen kleiner ist als der Referenzwert, die aktuellen digitalen Daten (Dn) ohne Änderung der Abstufung der aktuellen digitalen Bilddaten (Dn) ausgegeben werden.

3. Verfahren nach Anspruch 1, wobei dann, wenn die Differenz zwischen den Abstufungen der aktuellen digitalen Bilddaten (Dn') mit zurückgewiesenem Rauschen und der früheren digitalen Bilddaten (Dn - 1') mit zurückgewiesenem Rauschen größer ist als der Referenzwert, auf die LUT (304-1) zugegriffen wird, die Abstufung der aktuellen digitalen Bilddaten (Dn) umgewandelt wird, um die Ansprechgeschwindigkeit des Flüssigkristalls als Reaktion auf die aktuellen digitalen Bilddaten zu ändern, und dann die umgewandelten aktuellen digitalen Bilddaten (Dn") ausgegeben werden.

4. Verfahren nach Anspruch 3, wobei dann, wenn die Abstufung der aktuellen digitalen Bilddaten (Dn) größer ist als die Abstufung der früheren digitalen Bilddaten (Dn - 1), auf die LUT (304-1) zugegriffen wird und digitale Bilddaten (Dn"), für die die Ansprechgeschwindigkeit des Flüssigkristalls höher ist als die Ansprechgeschwindigkeit der aktuellen digitalen Bilddaten (Dn), ausgegeben werden.

5. Verfahren nach Anspruch 3, wobei dann, wenn die Abstufung der aktuellen digitalen Bilddaten (Dn) kleiner ist als die Abstufung der früheren digitalen Bilddaten (Dn - 1), auf die LUT (304-1) zugegriffen wird und digitale Bilddaten (Dn"), für die die Ansprechgeschwindigkeit der LCD geringer ist als die Ansprechgeschwindigkeit der LCD auf die aktuellen digitalen Bilddaten (Dn), ausgegeben werden.

6. Vorrichtung zum Verbessern einer Ansprechgeschwindigkeit einer LCD, die Folgendes umfasst:
eine erste Rauschzurückweisungseinheit (301), die konfiguriert ist, Rauschen in aktuellen digitalen Bilddaten (Dn) zurückzuweisen;
eine zweite Rauschzurückweisungseinheit (303), die konfiguriert ist, Rauschen in früheren digitalen Bilddaten (Dn - 1) an derselben Pixelposition wie jene der aktuellen digitalen Bilddaten (Dn) zurückzuweisen; und
eine Vergleichseinheit (304), die eine Nachschlagtabelle LUT (304-1) enthält, um Abstufungsdaten, die die Ansprechgeschwindigkeit der LCD auf die aktuellen digitalen Bilddaten (Dn) ändern, zu speichern, die dafür ausgelegt ist, eine Differenz zwischen Abstufungen von aktuellen digitalen Bilddaten (Dn') mit zurückgewiesenem Rauschen und Abstufungen früherer digitaler Bilddaten (Dn - 1') mit zurückgewiesenem Rauschen mit einem Referenzwert zu vergleichen und in Übereinstimmung mit dem Vergleichsergebnis zu bestimmen, ob die Abstufung der aktuellen digitalen Bilddaten (Dn) geändert werden soll, und um Abstufungsdaten, die die Ansprechgeschwindigkeit der LCD auf die aktuellen digitalen Bilddaten (Dn) ändern, aus der Nachschlagtabelle auszugeben, wenn bestimmt wird, dass die Abstufung der aktuellen digitalen Bilddaten (Dn) geändert werden soll;
wobei dann, wenn eine Differenz zwischen den Abstufungen der aktuellen digitalen Bilddaten (Dn') mit zurückgewiesenem Rauschen und der früheren digitalen Bilddaten (Dn - 1') mit zurückgewiesenem Rauschen kleiner ist als der Referenzwert, die aktuellen digitalen Bilddaten (Dn) ausgegeben werden.

7. Vorrichtung nach Anspruch 6, wobei dann, wenn eine Differenz zwischen den Abstufungen der aktuellen digitalen Bilddaten (Dn') mit zurückgewiesenem Rauschen und der früheren digitalen Bilddaten (Dn - 1') mit zurückgewiesenem Rauschen größer ist als der Referenzwert, die Vergleichseinheit auf die LUT zugreift, um die Abstufung der aktuellen digitalen Bilddaten umzuwandeln, die Ansprechgeschwindigkeit der LCD zu ändern und die umgewandelten digitalen Bilddaten (Dn") auszugeben.

8. Vorrichtung nach Anspruch 7, wobei dann, wenn die Abstufung der aktuellen digitalen Bilddaten (Dn) größer ist als die Abstufung der früheren digitalen Bilddaten (Dn - 1), die Vergleichseinheit auf die LUT zugreift, um digitale Bilddaten (Dn") auszugeben, für die die Ansprechgeschwindigkeit der LCD höher ist als die Ansprechgeschwindigkeit der LCD auf die aktuellen digitalen Bilddaten (Dn).

9. Vorrichtung nach Anspruch 7, wobei dann, wenn die Abstufung der aktuellen digitalen Bilddaten (Dn) kleiner ist als die Abstufung der früheren digitalen Bilddaten (Dn - 1), die Vergleichseinheit auf die LUT zugreift, um digitale Bilddaten (Dn") auszugeben, für die die Ansprechgeschwindigkeit der LCD geringer ist als die Ansprechgeschwindigkeit der LCD auf die aktuellen digitalen Bilddaten (Dn).

## Revendications

1. Procédé d'amélioration d'une vitesse de réponse de cristaux liquides d'un afficheur à cristaux liquides LCD (Liquid Crystal Display), le procédé comprenant les étapes suivantes :
rejeter le bruit dans une donnée d'image numérique courante (Dn) d'une position de pixel et dans une donnée d'image numérique précédente (Dn-1) à la même position de pixel ;
comparer une différence entre des gradations d'une donnée d'image numérique courante à bruit rejeté (Dn') et d'une donnée d'image numérique précédente à bruit rejeté (Dn-1') à une valeur de référence et déterminer s'il est nécessaire de modifier la gradation de la donnée d'image numérique courante (Dn) devant être fournie en sortie, sur la base du résultat de la comparaison ; et
accéder à une table de consultation LUT (Look Up Table) (304-1) stockant des données de gradation qui modifient une vitesse de réponse du cristal liquide en réponse à la donnée d'image numérique courante (Dn), lorsqu'il est déterminé qu'il est nécessaire de modifier la gradation de la donnée d'image numérique courante (Dn).

2. Procédé selon la revendication 1, dans lequel, lorsque la différence entre les gradations de la donnée d'image numérique courante à bruit rejeté (Dn') et la donnée d'image numérique précédente à bruit rejeté (Dn-1') est inférieure à la valeur de référence, on fournit en sortie la donnée numérique courante (Dn) sans modifier la gradation de la donnée d'image numérique courante (Dn).

3. Procédé selon la revendication 1, dans lequel, lorsque la différence entre les gradations de la donnée d'image numérique courante à bruit rejeté (Dn') et la donnée d'image numérique précédente à bruit rejeté (Dn-1') est supérieure à la valeur de référence, on accède à la LUT (304-1), on convertit la gradation de la donnée d'image numérique courante (Dn) pour modifier la vitesse de réponse du cristal liquide en réponse à la donnée d'image numérique courante puis on fournit en sortie la donnée d'image numérique courante convertie (Dn").

4. Procédé selon la revendication 3, dans lequel, lorsque la gradation de la donnée d'image numérique courante (Dn) est supérieure à la gradation de la donnée d'image numérique précédente (Dn-1), on accède à la LUT (304-1) et on fournit en sortie la donnée d'image numérique (Dn") pour laquelle la vitesse de réponse du cristal liquide est supérieure à la vitesse de réponse à la donnée d'image numérique courante (Dn).

5. Procédé selon la revendication 3, dans lequel, lorsque la gradation de la donnée d'image numérique courante (Dn) est inférieure à la gradation de la donnée d'image numérique précédente (Dn-1), on accède à la LUT (304-1) et on fournit en sortie une donnée d'image numérique (Dn") pour laquelle la vitesse de réponse du LCD est inférieure à la vitesse de réponse du LCD à la donnée d'image numérique courante (Dn).

6. Appareil destiné à améliorer la vitesse de réponse d'un LCD, comprenant :
une première unité de rejet de bruit (301) configurée pour rejeter le bruit dans une donnée d'image numérique courante (Dn) ;
une seconde unité de rejet de bruit (303) configurée pour rejeter le bruit dans une donnée d'image numérique précédente (Dn-1) à la même position de pixel que dans la donnée d'image numérique courante (Dn) ; et
une unité de comparaison (304), comprenant une table de consultation LUT (304-1) destinée à stocker des données de gradation qui modifient la vitesse de réponse du LCD à la donnée d'image numérique courante (Dn), conçue pour comparer une différence entre des gradations d'une donnée d'image numérique courante à bruit rejeté (Dn') et des gradations d'une donnée d'image numérique précédente à bruit rejeté (Dn-1') à une valeur de référence et pour déterminer s'il est nécessaire de modifier la gradation de la donnée d'image numérique courante (Dn) en fonction du résultat de la comparaison, et pour fournir en sortie des données de gradation, provenant de la table de consultation, qui modifient la vitesse de réponse du LCD à la donnée d'image numérique courante (Dn) lorsqu'il est déterminé qu'il est nécessaire de modifier la gradation de la donnée d'image numérique courante (Dn) ;
dans lequel, lorsqu'une différence entre les gradations de la donnée d'image numérique courante à bruit rejeté (Dn') et la donnée d'image numérique précédente à bruit rejeté (Dn-1') est inférieure à la valeur de référence,
la donnée d'image numérique courante (Dn) est fournie en sortie.

7. Appareil selon la revendication 6, dans lequel, lorsqu'une différence entre les gradations de la donnée d'image numérique courante à bruit rejeté (Dn') et la donnée d'image numérique précédente à bruit rejeté (Dn-1') est supérieure à la valeur de référence, l'unité de comparaison accède à la LUT pour convertir la gradation de la donnée d'image numérique courante pour modifier la vitesse de réponse du LCD et pour fournir en sortie la donnée d'image numérique convertie (Dn").

8. Appareil selon la revendication 7, dans lequel, lorsque la gradation de la donnée d'image numérique courante (Dn) est supérieure à la gradation de la donnée d'image numérique précédente (Dn-1), l'unité de comparaison accède à la LUT pour fournir en sortie une donnée d'image numérique (Dn") pour laquelle la vitesse de réponse du LCD est supérieure à la vitesse de réponse du LCD à la donnée d'image numérique courante (Dn).

9. Appareil selon la revendication 7, dans lequel, lorsque la gradation de la donnée d'image numérique courante (Dn) est inférieure à la gradation de la donnée d'image numérique précédente (Dn-1), l'unité de comparaison accède à la LUT pour fournir en sortie une donnée d'image numérique (Dn") pour laquelle la vitesse de réponse du LCD est inférieure à la vitesse de réponse du LCD à la donnée d'image numérique courante (Dn).
